# EUROPÄISCHE PATENTSCHRIFT

(11) **EP 1 592 530 B1**
(45) Veröffentlichungstag und Bekanntmachung des Hinweises auf die Patenterteilung: **25.05.2016**
(21) Anmeldenummer: 04705377.2
(22) Anmeldetag: 27.01.2004
(51) Int. Cl.: B23K 1/008, B23K 1/012, F27B 9/10

(54) **VERFAHREN UND VORRICHTUNG ZUR TEMPERATURBEAUFSCHLAGUNG VON WERKSTÜCKEN**
METHOD AND DEVICE FOR TEMPERATURE IMPINGEMENT OF WORKPIECES
PROCEDE ET DISPOSITIF PERMETTANT D'EXPOSER DES PIECES A UNE TEMPERATURE ADEQUATE

(30) Priorität: 05.02.2003 DE 10304774
(43) Veröffentlichungstag der Anmeldung: 09.11.2005
(73) Patentinhaber: PINK GmbH Thermosysteme, 97877 Wertheim (DE)
(72) Erfinder: WEBER, Stefan, 97877 Wertheim (DE)
(74) Vertreter: Spachmann, Holger
(86) Internationale Anmeldenummer: PCT/DE2004/000118
(87) Internationale Veröffentlichungsnummer: WO 2004/069461

(56) Entgegenhaltungen:
- EP-A- 0 307 319
- EP-A- 0 461 961
- EP-A- 1 106 294
- GB-A- 2 167 991
- US-A- 5 567 151
- US-A- 5 878 941

## Beschreibung

Die vorliegende Erfindung betrifft ein Verfahren zur Temperaturbeaufschlagung von Werkstücken gemäß dem Oberbegriff des Anspruchs 1. Des Weiteren betrifft die Erfindung eine Vorrichtung zur Durchführung dieses Verfahrens gemäß dem Oberbegriff des Anspruchs 6.

Ein Verfahren bzw. eine Vorrichtung ist beispielsweise aus der DE 199 53 654 A1 bekannt, in der eine Temperierung eines Werkstücks mit einer Beheizungseinrichtung beschrieben ist, die je nach Relativanordnung zwischen einer Heizplatte der Beheizungseinrichtung und einer Trägereinrichtung zur Aufnahme des Werkstücks eine Kontakt- oder Strahlungsbcheizung des Werkstücks ermöglicht. Mittels der durch die Beheizungseinrichtung erfolgenden Temperierung des Werkstücks wird ein Aufschmelzen eines auf dem Werkstück angeordneten Lotmaterials zur Herstellung einer Lotverbindung erreicht.

Bei der bekannten Beheizungseinrichtung erfolgt die Wärmeübertragung von der Heizplatte auf das Werkstück bzw. den Lotmaterialträger mittelbar über die Trägereinrichtung, deren Unterseite der Kontur der Oberseite der Heizplatte angepasst ist, so dass bei einer Kontaktbeheizung der Trägereinrichtung ein gleichmäßiger Wärmeübergang durch eine flächige Anlage der Heizplatte an die Trägereinrichtung gegeben ist. Bei einer Strahlungsbeheizung der Trägereinrichtung über die Heizplatte, bei der ein Abstand zwischen der Trägereinrichtung und der Heizplatte ausgebildet ist, verhindern darüber hinaus die übereinstimmenden Flächenkanturen der Unterseite der Trägereinrichtung und der Oberseite der Heizplatte die Ausbildung von Strahlungsschatten. Infolge des Strahlungsschattens kann es zur Ausbildung eines Temperaturgradienten auf der Werkstückoberfläche mit der damit verbundenen Gefahr lokaler Überhitzungcn des Werkstücks kommen.

Aus dem Vorstehenden ergibt sich, dass je nach Wärmekapazität der Trägereinrichtung, die als Wärmeübertragungseinrichtung dient, relativ hohe Verweilzeiten der Werkstücke bzw. Lotmaterialträger in der Beheizungseinrichtung notwendig sind, um eine zum gleichmäßigen Aufschmelzen des Lotmatexials geeignete Erwärmung der Werkstücke bzw. Lotmaterialträger zu erreichen. Dasselbe gilt für einen geregelten Abkühlvorgang zur Erstarrung des Lotmatcrials, bei dem anstelle einer Heizplatte eine Kühlplatte zum Einsatz kommt.

Aus der EP-A-1 106 294 ist ein Verfahren zur Temperaturbeaufschlagung von Werkstücken oder Bauteilen gemäß dem Oberbegriff des Anspruchs 1 bekannt. Insbesondere wird eine Lötvorrichtung beschrieben, die eine poröse Platte aufweist und eine in einem Vergusskörper angeordnete Heizeinrichtung. Die Vorrichtung soll eine Hochgeschwindigkeitsströmung ermöglichen, die eine möglichst schnelle Aufheizung der Platine ermöglichen soll. Um sicherzustellen, dass aufgrund der Hochgeschwindigkeitsströmung keine Positionsveränderungen der beaufschlagten elektronischen Teile erfolgen, ist unabhängig von der vorgenannten porösen Platte eine Lochplatte vorgesehen, die unmittelbar benachbart der aufzuheizenden Platine angeordnet ist und eine Vergleichmäßigung der Strömung ermöglicht.

Die EP-A-0 461 961 zeigt ein Verfahren und eine Vorrichtung, bei dem bzw. der zur Belotung von Platinen in einem Durchlaufofen poröse Platten eingesetzt werden, die von einer temperierten Luftströmung durchströmt werden. Zur Beheizung der durch die porösen Platten hindurchgeleiteten Luftströmung ist eine Beheizungseinrichtung vorgesehen, die von außen auf der keramischen Platte aufgebracht ist und neben der keramischen Platte im Wesentlichen ein Luftzuleitungsgehäuse beheizt.

Die US-A-5 878 941 zeigt ein Verfahren zur Belotung von Bauteilen, bei dem eine Transportfolie, auf der die Bauteile angeordnet sind, mit einem beheizten Gas beaufschlagt wird.

Aus der GB-A-2 167 991 ist eine Vorrichtung zur Entfernung von Lotmaterial von Lotstellen bekannt, bei der eine Beheizung der Lotstellen mit einem beheizten Gas erfolgt.

Der Erfindung liegt die Aufgabe zu Grunde, ein Verfahren der eingangs genannten Art mit einem wesentlich vereinfachten Vorrichtungsaufbau durchzuführen.

Diese Aufgabe wird durch ein Verfahren mit den Merkmalen des Anspruchs 1 gelöst.

Bei dem erfindungsgemäßen Verfahren erfolgt die Temperaturbeaufschlagung zumindest phasenweise oder auch zusätzlich mittels Konvektion, derart, dass zur Ausbildung einer Temperiergasströmung eine Gasströmung durch einen gasdurchlässigen Temperierkörper geleitet wird und zumindest ein Oberflächenbereich des Werkstücks mit der derart gebildeten Temperiergasströmung beaufschlagt wird.

Aufgrund der Beaufschlagung des Werkstücks mit einer temperierten Gasströmung ist es möglich, zwischen dem Temperierkörper und dem Werkstück eine Stauströmung auszubilden, die unabhängig von der Topographic der Werkstückunterseite eine weitestgehend gleichmäßige Temperaturbeaufschlagung des Werkstücks ermöglicht.

Die Durchströmung des Temperierkörpers mit dem sich daraus ergebenden Strömungswiderstand gegen die Strömung des Gases durch den gasdurchlässigen Temperierkörper sorgt für einen guten Wärmeübergang zwischen dem Temperierkörper und dem Gas. Zur Ausbildung der Gasdurchlässigkeit kann der Temperierkörper mit Bohrungen oder Kanälen versehen sein oder auch aus Elementen, die Bohrungen oder Kanäle aufweisen, wie beispielsweise Röhren, zusammengesetzt sein. Weiterhin besteht die Möglichkeit, dass der Temperierkörper, beispielsweise aufgrund seiner Herstellungsart, porös und somit gasdurchlässig ausgebildet ist.

Die erfindungsgemäß poröse Ausgestaltung des Temperierkörpers zur Erzielung der Gasdurchlässigkeit bewirkt bei der Durchströmung des Temperierkörpers eine im Wesentlichen homogene Gasströmung, die eine gleichmäßige Temperaturbeaufschlagung des Werkstücks ermöglicht. Die gleichmäßige und unter relativen geringem Überdruck aus dem Tempcrierkörper ausströmende Gasströmung ermöglicht die Ausbildung eines dynamischen, an die Oberflächentopographie des Werkstücks angepassten Druckpolsters zwischen dem Temperierkörper und dem Werkstück, wobei Strömungsverluste aus dem Druckspalt zwischen Werkstück und Temperierkörper durch nachströmendes Temperiergas ausgeglichen werden.

Erfindungsgemäß erfolgt die Temperierung des Temperierkörpers vermittels zumindest eines im Temperierkörper angeordneten Tempericraggregats, so dass unabhängig von der gewählten Art der Temperierung des Temperierkörpers dieser entsprechend seiner Durchlässigkeit bzw. Porosität und seines thermischen Verhaltens gewählt werden kann.

Besonders vorteilhaft hinsichtlich der Betriebssicherheit des Temperierkörpers erweist es sich, wenn der Wärmeübergang zwischen dem Temperieraggrcgat und dem Temperierkörper vermittels Wärmeleitung erfolgt, so dass unabhängig von der Funktionsweise des Temperieraggregats dieses eine geschlossene Außenwandfläche und damit eine Sperrfläche gegenüber dem porösen Gefüge des Temperierkörpers aufweisen kann.

Besonders effektiv durchführbar ist das Verfahren, wenn die Zuströmung des Gases auf den Temperierkörper vertikal erfolgt, so dass die Druckströmung gestützt wird durch die sich aufgrund der Erwärmung des Gases ergebende Konvektionsströmung. Die Zuströmung kann aber je nach Ausbildung des Temperierkörpers auch schräg oder horizontal erfolgen. Auch kann der Temperierkörper so ausgebildet sein, das er eine gezielte Gasführung ermöglicht.

Wenn die Temperiergasströmung nach Austritt aus dem Temperierkörper und vor Beaufschlagung des Werkstücks durch eine Strömungsleiteinrichtung geleitet wird, kann eine definierte Anströmung ausgewählter Oberflächenbereiche des Werkstücks erfolgen.

Insbesondere bei höher gelegenen Schmelztemperaturen des auf dem Werkstück bzw. Lotmaterialträger aufzuschmelzenden Lotes kann es sich als vorteilhaft erweisen, bereits das auf den Temperierkörper auftreffende Gas vorzuwärmen, so dass vor Eintritt der Gasströmung in den Temperierkörper eine Vortemperierung des Gases erfolgt.

Eine zur Durchführung des Verfahrens besonders geeignete Vorrichtung zur Temperaturbeaufschlagung weist die Merkmale des Anspruchs 6 auf.

Die erfindungsgemäße Vorrichtung umfasst eine Zuströmeinrichtung zur Zuführung einer Gasströmung in eine Temperierkammer, einen in der Temperierkammer zur Beaufschlagung durch die aus der Zuströmeinrichtung austretende Gasströmung angeordneten gasdurchlässigen Temperierkörper und eine gegenüberliegend einer Strömungsaustrittsfläche des Temperierkörpers angeordnete Trägereinrichtung zur Aufnahme des Werkstücks, derart, dass zumindest ein Oberflächenbereich des Werkstücks mit einer aus der Strömungsaustrittsfläche des Temperierkörpers austretenden Temperiergasströmung beaufschlagbar ist.

Erfindungsgemäß ist der Temperierkörper porös ausgebildet, so dass ein besonders effektiver Wärmeübergang vom Temperierkörper auf das Gas ermöglicht wird.

Wenn zur Temperierung des Temperierkörpers im Temperierkörper zumindest ein Temperieraggregat angeordnet ist, kann unabhängig von der Funktionsweise des Temperieraggregats der Temperierkörper entsprechend seiner Porosität und seines thermischen Verhaltens ausgewählt werden. Ein solches Temperieraggregat kann auch als eine im Temperierkörper ausgebildete und von einem Wärmeträgermedium durchströmte Kanaleinrichtung oder Leitungseinrichtung ausgebildet sein; beispielsweise auch durch eine elektrische Widerstandsbeheizung.

Wenn darüber hinaus der Temperierkörper monolithisch ausgebildet ist, zeichnet sich der Temperierkörper selbst durch eine besonders gute Wärmeleitung aus, so dass sich der Temperierkörper gegebenenfalls zusätzlich auch besonders für eine Kontaktbeheizung des Werkstücks eignet.

Um zum einen eine möglichst gleichmäßig poröse Ausgestaltung des Gefüges des Temperierkörpers zu erhalten und zum anderen ein gutes thermisches Verhalten, erweist es sich als vorteilhaft, den Temperierkörper aus einem Sintermaterial zu gestalten. Das Sintermaterial kann insbesondere metallisch oder keramisch ausgebildet sein.

Ebenso kann eine Gasdurchlässigkeit des Temperierkörpers durch Kanäle oder Bohrungen in einem metallischen oder beispielsweise auch keramischen Körper realisiert sein.

Wenn zwischen der Strömungsaustrittsfläche des Temperierkörpers und der Trägereinrichtung zur Aufnahme des Werkstücks eine Strömungsleiteinrichtung angeordnet ist, ist eine besonders gezielte Beaufschlagung ausgewählter Oberflächenbereiche des Werkstücks möglich.

Nachfolgend wird eine bevorzugte Ausgestaltung der Erfindung anhand der Zeichnung erläutert. Es zeigen:
- **Fig. 1**: eine Beheizungsvorrichtung in Konvektions-/ Strahlungskonfiguration;
- **Fig. 2**: die Beheizungsvorrichtung in Kontaktkonfiguration.

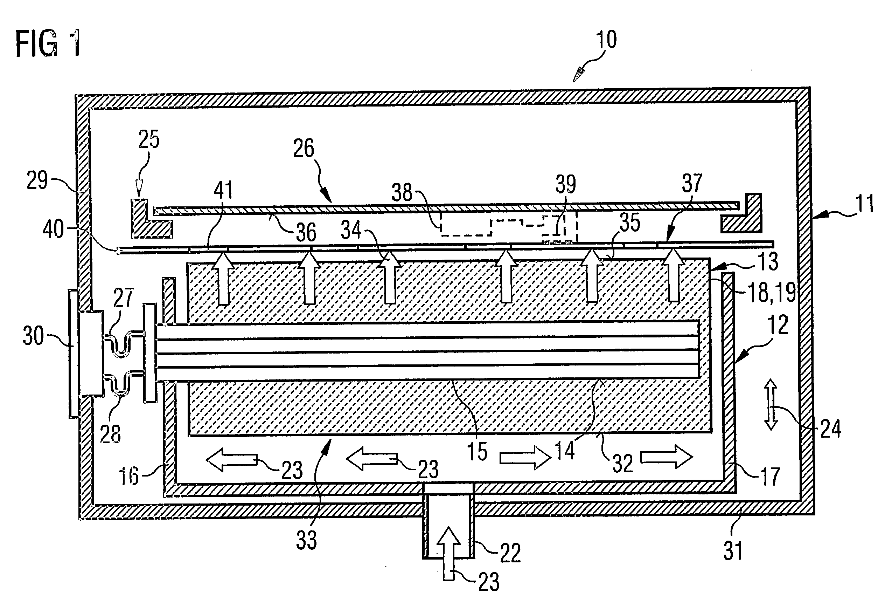

**Fig. 1** zeigt eine Temperiervorrichtung 10 mit einer Temperierkammer 11, in der aufgenommen in einer Temperierkörperaufnahme 12 ein Temperierkörper 13 angeordnet ist.

Der Temperierkörper 13 besteht im vorliegenden Fall aus einem porös und damit fluid durchströmbar ausgebildeten Keramikmaterial und ist in einer Aufnahmebohrung 14 mit einem im vorliegenden Fall als Heizpatrone ausgebildeten Temperieraggregat 15 versehen. Wie aus **Fig. 1** ferner hervorgeht, dient im Fall der vorliegenden Ausführungsform das Temperaturaggregat 15 gleichzeitig zur mechanischen Verbindung des Temperierkörpers 13 mit der Temperierkörperaufnahme 12, derart, dass der Temperierkörper 13 auf dem mit einer Seitenwand 16 der Temperierkörperaufnahme 12 verbundenen Temperieraggregat 15 kragarmartig gelagert ist. Die Seitenwand 16 ist gegenüberliegend einer weiteren Seitenwand 17 angeordnet, die zusammen mit zwei Längsseitenwänden 18, 19 und einer Bodenwand 20 ein nach oben hin offenes Gehäuse 21 der Temperierkörperaufnahme 12 bildet. Die Bodenwand 20 der Temperierkörperaufnahme 12 ist mit einer Zuströmeinrichtung 22 versehen, die die Einleitung einer Gasströmung 23 in das nach oben hin offene Gehäuse 21 ermöglicht.

Wie durch den Doppelpfeil 24 angedeutet, ist die Temperierkörperaufnahme 12 im vorliegenden Fall als vertikal verfahrbare Hubeinrichtung ausgestaltet, so dass beispielsweise eine Zustellbewegung des Temperierkörpers 13 in Richtung auf eine oberhalb des Temperierkörpers 13 angeordnete Trägereinrichtung 25 möglich ist, die zur Positionierung eines Werkstücks 26, das im vorliegenden Fall beispielhaft als Platine ausgebildet ist, dient. Die Trägereinrichtung 25 ermöglicht eine translatorische Bewegung des Werkstücks 26 senkrecht zur Zeichenebene, so dass die Trägereinrichtung 25 eine translatorische Zuführbewegung des Werkstücks 26 auf den Temperierkörper 13 zu und eine Wegführbewegung vom Temperierkörper 13 weg ausführen kann. Zur Trennung der Temperierkammer 11 von einer umgebenden Atmosphäre ist diese in Translationsrichtung der Trägereinrichtung 25 mit zwei senkrecht zur Zeichenebene jeweils vor und hinter der Temperierkörperaufnahme 12 angeordneten Seitenwänden versehen, die nicht näher dargestellte Ein- bzw. Ausschleuseinrichtungen aufweisen.

Um eine behinderungsfreie Hubbewegung der Temperierkörperaufnahme 12 bzw. des Temperierkörpers 13 zu ermöglichen, ist das hier als Heizpatrone ausgebildete Temperieraggregat 15 über flexible elektrische Zuleitungen 27, 28 mit einem in einer Kammerseitenwand 29 angeordneten elektrischen Versorgungsanschluss 30 versehen.

Im Betrieb der in **Fig. 1** dargestellten Temperiervorrichtung 10, die im Falle der Ausbildung des Temperieraggregats 15 als Heizeinrichtung zur Beheizung des Werkstücks 26 und im Falle der Ausbildung des Temperieraggregats 15 als Kühleinrichtung zur Abkühlung des Werkstücks 26 dient, wird der Temperierkörperaufnahme 12 durch die durch eine Bodenwand 31 der Temperierkammer 11 hindurchgeführte Zuströmeinrichtung 22 eine Gasströmung 23 zugeführt. Bei dem hierzu verwendeten Gas kann es sich beispielsweise um Stickstoff handeln. Die Gasströmung 23 tritt oberhalb der Bodenwand 31 in einen zwischen der Bodenwand 31 und einer durch die Unterseite des Temperierkörpers 13 gebildeten Strömungseintrittsfläche 32 gebildeten Spaltraum 33 ein. Von hier aus dringt die Gasströmung 23 durch die Strömungseintrittsfläche 32 in den porösen Temperierkörper 13 ein und durchströmt diesen in im Wesentlichen vertikaler Richtung. Während der Durchströmung des Temperierkörpers 13 erfolgt eine Temperierung der Gasströmung 23, so dass diese als in ihrer Temperatur gegenüber der eintretenden Gasströmung 23 veränderte Temperiergasströmung 34 aus einer Strömungsaustrittsfläche 35 des Temperierkörpers 13 wieder austritt. Im Falle der vorbeschriebenen Ausgestaltung des Temperieraggregats 15 als Heizpatrone erfolgt bei Betrieb der Heizpatrone eine Erwärmung des Temperierkörpers 13 auf eine Betriebstemperatur. Während der Durchströmung des Temperierkörpers 13 erfolgt ein Wärmeübergang vom Temperierkörper 13 auf die Gasströmung 23, so dass die aus der Strömungsaustrittsfläche 35 austretende Temperiergasströmung 34 eine gegenüber der in die Strömungseintrittsfläche 32 eintretenden Gasströmung 23 erhöhte Temperatur aufweist.

Aufgrund des großen Strömungswiderstands im Temperierkörper 13 tritt die Temperiergasströmung 35 mit relativ geringer Strömungsgeschwindigkeit und als gleichmäßige Strömung in einen zwischen der Strömungsaustrittsfläche 35 des Temperierkörpers 13 und einer Unterseite 36 des oberhalb des Temperierkörpers 13 angeordneten Werkstücks 26 ausgebildeten Temperierspalt 37 ein.

Die infolge des durch das Werkstück 26 gebildeten Strömungswiderstands im Temperierspalt 37 vorliegende Stauströmung bildet im Temperierspalt 37 ein leichtes Druckpolster aus, wobei seitliche Strömungsverluste aus dem Temperierspalt 37 durch die aus der Strömungsaustrittsfläche 35 nachströmende Temperiergasströmung 34 kompensiert werden. Aufgrund der Wärmezufuhr im Temperierkörper 13 bildet sich ergänzend zu der in den Temperierkörper 13 eingeleiteten Druckströmung eine Konvelctionsströmung aus. Das im Temperierspalt 37 ausgebildete Konvektions- oder Druckpolster führt zu einer Temperaturbeaufschlagung des einen Strömungswiderstand bildenden Werkstücks 26. Die Temperaturbeaufschlagung erfolgt dabei relativ gleichmäßig verteilt über die Oberfläche der Unterseite 36 des Werkstücks 26 unabhängig von der Oberflächentopographie der Unterseite 36. Wegen des Druckpolsters können auch senkrecht zur Strömungsaustrittsfläche 35 des Temperierkörpers 13 angeordnete Oberflächenbereiche 38 sowie gar etwaige Hinterschneidungen 39 in der Werkstücktopographie temperaturbeaufschlagt werden.

**Fig. 1** zeigt die Temperiervorrichtung 10 mit einem in Konvektions-/ Strahlungs-Konfiguration angeordneten Temperierkörper 10, der neben der vorstehend erörterten Konvektionstemperierung des Werkstücks 26 in der in **Fig. 1** vom Werkstück 26 beabstandeten Anordnung des Temperierkörpers 13 eine zusätzliche Strahlungsbeaufschlagung des Werkstücks 26 ermöglicht. Dabei kann der Abstand entsprechend der gewünschten Temperaturbeaufschlagung eingestellt werden. Wie bereits vorstehend erwähnt, kann je nach Ausbildung des Temperieraggregats 15 eine Kühlung oder Beheizung des Werkstücks 26 erfolgen.

Darüber hinaus ist es auch möglich, im Temperierspalt zwischen der Strömungsaustrittsfläche 35 und der Unterseite 36 des Werkstücks 26 eine in **Fig. 1** angedeutete Strömungsleiteinrichtung vorzusehen, die eine selektive Temperaturbeaufschlagung der Unterseite 36 des Werkstücks 26 durch in der Strömungsleiteinrichtung 40 ausgebildete Strömungsleitöffnungen 41 ermöglicht.

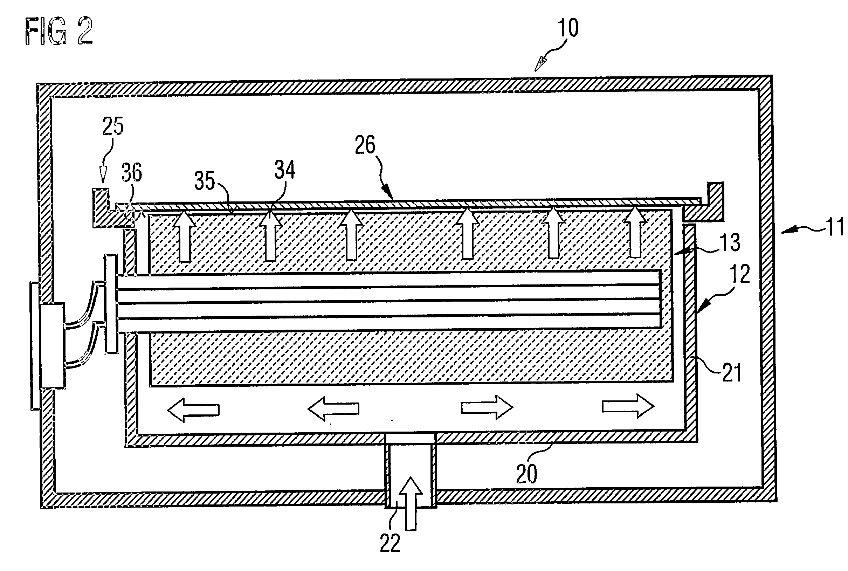

**Fig. 2** zeigt die Temperiervorrichtung 10 mit einem in Kontaktkonfiguration angeordneten Temperierkörper 13, in der dieser vermittels einer Zustellbewegung der Temperierkörperaufnahme 12, wie durch den Pfeil 42 in **Fig. 2** angedeutet, mit seiner durch die Strömungsaustrittsfläche 35 gebildeten Oberseite in Berührungskontakt mit der Unterseite 36 des Werkstücks 26 gebracht ist.

Die in **Fig. 2** dargestellte Kontakttemperierung, also beispielsweise eine Kontaktbeheizung im Falle der Ausbildung des Temperieraggregats als Heizpatrone, eignet sich natürlich in besonderem Maße für Werkstücke mit im Wesentlichen eben ausgebildeter Topographie der Werkstückunterseite 26. Jedoch ist die in **Fig. 2** dargestellte Kontaktbeheizung ebenso vorteilhaft anwendbar, wenn es um eine selektive Beheizung von erhöhten Oberflächenbereichen auf der Unterseite 36 des Werkstücks 26 geht.

Ergänzend zu den Darstellungen der Temperiervorrichtung 10 in den **Fig. 1** und **2** ist es möglich, die Zuströmeinrichtung an der Bodenwand 20 der als Gehäuse 21 ausgebildeten Temperierkörperaufnahme 12 nicht unmittelbar an eine Druckquelle zur Zuführung von Gas anzuschließen, sondern zwischen der Druckquelle und der Zuströmeinrichtung 22 eine hier nicht näher dargestellte Vortemperiereinrichtung vorzusehen, die eine Vortemperierung, also beispielsweise eine Vorwärmung, der in die Temperiervorrichtung einströmenden Gasströmung 23 ermöglicht, so dass bei Bedarf höhere bzw. niedrigere Temperaturen der aus dem Temperierkörper 13 austretenden Temperiergasströmung möglich sind.

## Patentansprüche

1. Verfahren zur Temperaturbeaufschlagung von Werkstücken oder Bauteilen, insbesondere zur Herstellung einer Lotverbindung zwischen einem Lotmaterial und zumindest einem als Lotmaterialträger dienenden Werkstück oder Bauteil durch Erwärmen des auf dem Lotmaterialträger angeordneten Lotmaterials, wobei die Temperaturbeaufschlagung zumindest phasenweise mittels Konvektion in einer Temperierkammer (11) erfolgt, derart, dass zur Ausbildung einer Temperiergasströmung (34) eine Gasströmung (23) durch einen gasdurchlässigen Temperierkörper (13) geleitet wird und zumindest ein Oberflächenbereich des Werkstücks (26) mit der derart gebildeten Temperierströmung beaufschlagt wird, **dadurch gekennzeichnet,**
**dass** der Temperierkörper (13) porös ausgebildet und mit einem im Temperierkörper angeordneten Temperieraggregat (15) versehen ist, wobei der Temperierkörper die Gasströmung **durch seinen Strömungswiderstand** erwärmt und durch **seine poröse Ausgestaltung** eine homogene **Gasströmung** ausbildet,
und **dass** die Gasströmung an dem Temperierkörper entlang geführt wird, um durch eine Strömungseintrittsfläche (32) in den porösen Temperierkörper einzudringen und diesen anschließend in im Wesentlichen vertikaler Richtung zu durchströmen.

2. Verfahren nach Anspruch 1,
**dadurch gekennzeichnet,**
**dass** der Wärmeübergang zwischen dem Temperieraggregat (15) und dem Temperierkörper (13) vermittels Wärmeleitung erfolgt.

3. Verfahren nach Anspruch 1 oder 2,
**dadurch gekennzeichnet,**
**dass** die Gasströmung (23) dem Temperierkörper (13) vertikal zugeführt wird.

4. Verfahren nach einem der Ansprüche 1 bis 3,
**dadurch gekennzeichnet,**
**dass** die Temperiergasströmung (34) nach Austritt aus dem Temperierkörper (13) und vor Beaufschlagung des Werkstücks (26) durch eine Strömungsleiteinrichtung (40) geleitet wird.

5. Verfahren nach einem der Ansprüche 1 bis 4,
**dadurch gekennzeichnet,**
**dass** vor Eintritt der Gasströmung (23) in den Temperierkörper (13) eine Vortemperierung der Gasströmung erfolgt.

6. Vorrichtung zur Temperaturbeaufschlagung von Werkstücken oder Bauteilen, insbesondere zur Herstellung einer Lotverbindung zwischen einem Lotmaterial und zumindest einem als Lotmaterialträger dienenden Werkstück oder Bauteil, durch Erwärmen des auf dem Lotmaterialträger angeordneten Lotmaterials, mit einer Zuströmeinrichtung (22) zur Zuführung einer Gasströmung (23) in einer Temperierkammer (11), einem in der Temperierkammer zur Beaufschlagung durch die aus der Zuströmeinrichtung austretende Gasströmung angeordneten gasdurchlässigen Temperierkörper (13), und einen gegenüberliegend einer Strömungsaustrittsfläche (35) des Temperierkörpers (13) angeordnete Trägereinrichtung (25) **in einer Temperierkammer (11)** zur Aufnahme des Werkstücks (26), derart, dass zumindest ein Oberflächenbereich des Werkstücks mit einer aus der Strömungsaustrittsfläche des Temperierkörpers austretenden Temperiergasströmung (34) beaufschlagbar ist, **dadurch gekennzeichnet, dass** der Temperierkörper (13) porös ausgebildet und mit einem im Temperierkörper angeordneten Temperieraggregat (15) versehen ist, wobei der Temperierkörper **durch seinen Strömungswiderstand** die Gasströmung erwärmt und durch **seine poröse Ausgestaltung** eine homogene **Gasströmung** ausbildet, und dass die Gasströmung an dem Temperierkörper entlang geführt wird, um durch eine Strömungseintrittsfläche (32) in den porösen Temperierkörper einzudringen und diesen anschließend in im Wesentlichen vertikaler Richtung zu durchströmen.

7. Vorrichtung nach Anspruch 6,
**dadurch gekennzeichnet,**
**dass** der Temperierkörper (13) monolithisch ausgebildet ist.

8. Vorrichtung nach einem der Ansprüche 6 oder 7,
**dadurch gekennzeichnet,**
**dass** der Temperierkörper (13) aus einem Sintermaterial gebildet ist.

9. Vorrichtung nach einem der Ansprüche 6 bis 8,
**dadurch gekennzeichnet,**
**dass** der Temperierkörper (13) aus einem Metall gebildet ist.

10. Vorrichtung nach einem der Ansprüche 6 bis 8,
**dadurch gekennzeichnet,**
**dass** der Temperierkörper (13) aus einem Keramikmaterial gebildet ist.

11. Vorrichtung nach einem der Ansprüche 6 bis 10,
**dadurch gekennzeichnet,**
**dass** zwischen der Strömungsaustrittsfläche (35) des Temperierkörpers (13) und der Trägereinrichtung (25) zur Aufnahme des Werkstücks (26) eine Strömungsleiteinrichtung (40) angeordnet ist.

## Claims

1. Method for applying a given temperature to workpieces or components, in particular for making a soldered connection between a soldering material and at least one workpiece or component acting as a soldering material carrier, by heating up the soldering material arranged on the soldering material carrier, where the given temperature is applied at least in phases by means of convection inside a temperature control chamber (11) such that a gas flow (23) is passed through a gas-permeable temperature control element (13) in order to create a temperature-controlled gas flow (34) and that at least one surface area of the workpiece (26) is subjected to the temperature-controlled flow thus formed,
**characterized in that**
the temperature control element (13) is designed porous and is provided with a temperature control unit (15) arranged inside the temperature control element, where said temperature control element heats up the gas flow by its flow resistance and creates due to its porous design a homogeneous gas flow,
and **in that** the gas flow is guided along the temperature control element in order to penetrate through a flow inlet surface (32) into the porous temperature control element and then flow through the latter in a substantially vertical direction.

2. Method according to claim 1,
**characterized in that**
the heat transition between the temperature control unit (15) and the temperature control element (13) is achieved by means of heat conduction.

3. Method according to claim 1 or 2,
**characterized in that**
the gas flow (23) is supplied vertically to the temperature control element (13).

4. Method according to one of claims 1 to 3,
**characterized in that**
the temperature-controlled gas flow (34) is passed through a flow guide device (40) after exiting the temperature control element (13) and before being applied to the workpiece (26).

5. Method according to one of claims 1 to 4,
**characterized in that**
the gas flow (23) is previously temperature-controlled before entering the temperature control element (13).

6. Device for applying a given temperature to workpieces or components, in particular for making a soldered connection between a soldering material and at least one workpiece or component acting as a soldering material carrier, by heating up the soldering material arranged on the soldering material carrier, with an inflow device (22) for supplying a gas flow (23) inside a temperature control chamber (11), a gas-permeable temperature control element (13) arranged inside the temperature control chamber for application of the gas flow exiting the inflow device, and a carrier device (25) arranged opposite a flow outlet surface (35) of the temperature control element (13) inside a temperature control chamber (11) for receiving the workpiece (26), such that at least one surface area of the workpiece can be subjected to the temperature-controlled gas flow (34) exiting the flow outlet surface of the temperature control element,
**characterized in that**
the temperature control element (13) is designed porous and is provided with a temperature control unit (15) arranged inside the temperature control element, where said temperature control element heats up the gas flow by its flow resistance and creates due to its porous design a homogeneous gas flow,
and **in that** the gas flow is guided along the temperature control element in order to penetrate through a flow inlet surface (32) into the porous temperature control element and then flow through the latter in a substantially vertical direction.

7. Device according to claim 6,
**characterized in that**
the temperature control element (13) is designed monolithic.

8. Device according to one of claims 6 or 7,
**characterized in that**
the temperature control element (13) is formed from a sintered material.

9. Device according to one of claims 6 to 8,
**characterized in that**
the temperature control element (13) is formed from a metal.

10. Device according to one of claims 6 to 8,
**characterized in that**
the temperature control element (13) is formed from a ceramic material.

11. Device according to one of claims 6 to 10,
**characterized in that**
a flow guide device (40) is arranged between the flow outlet surface (35) of the temperature control element (13) and the carrier device (25) for receiving the workpiece (26).

## Revendications

1. Procédé permettant l'exposition de pièces d'oeuvre ou de composants à une température donnée, en particulier pour établir une jonction par brasage entre un matériau de brasage et au moins une pièce d'oeuvre ou un composant servant de support de matériau de brasage, par échauffement du matériau de brasage disposé sur le support de matériau de brasage, sachant que l'exposition à une température donnée a lieu au moins par phases au moyen de la convection dans une chambre de régulation de la température (11), de manière telle que pour obtenir un flux de gaz à la température donnée (34), un flux de gaz (23) est guidé à travers un corps de régulation de la température (13) perméable au gaz et qu'au moins une zone de la surface de la pièce d'oeuvre (26) est exposée au flux à la température donnée ainsi obtenu,
**caractérisé en ce**
**que** le corps de régulation de la température (13) est poreux et muni d'une unité de régulation de la température (15) disposée dans le corps de régulation de la température, sachant que le corps de régulation de la température échauffe le flux de gaz par sa résistance à l'écoulement et forme un flux de gaz homogène grâce à sa configuration poreuse,
et **que** le flux de gaz est guidé le long du corps de régulation de la température afin de pénétrer à travers une surface d'entrée de flux (32) dans le corps poreux de régulation de la température et de le traverser ensuite selon une direction sensiblement verticale.

2. Procédé selon la revendication 1,
**caractérisé en ce**
**que** le transfert thermique entre l'unité de régulation de la température (15) et le corps de régulation de la température (13) a lieu par conduction thermique.

3. Procédé selon la revendication 1 ou 2,
**caractérisé en ce**
**que** le flux de gaz (23) est acheminé à la verticale dans le corps de régulation de la température (13).

4. Procédé selon l'une des revendications 1 à 3,
**caractérisé en ce**
**qu'**après sortie du corps de régulation de la température (13) et avant d'être appliqué sur la pièce d'oeuvre (26), le flux de gaz à la température donnée (34) est guidé par un dispositif de guidage de flux (40).

5. Procédé selon l'une des revendications 1 à 4,
**caractérisé en ce**
**que** le flux de gaz subit une mise en température avant l'entrée du flux de gaz (23) dans le corps de régulation de la température (13).

6. Dispositif permettant l'exposition de pièces d'oeuvre ou de composants à une température donnée, en particulier pour établir une jonction par brasage entre un matériau de brasage et au moins une pièce d'oeuvre ou un composant servant de support de matériau de brasage, par échauffement du matériau de brasage disposé sur le support de matériau de brasage, ledit dispositif comprenant un dispositif d'amenée (22) pour introduire un flux de gaz (23) dans une chambre de régulation de la température (11), un corps de régulation de la température (13) perméable au gaz disposé dans la chambre de régulation de la température pour appliquer le flux de gaz sortant du dispositif d'amenée, ainsi qu'un élément porteur (25) disposé dans une chambre de régulation de la température (11) en face d'une surface de sortie de flux (35) du corps de régulation de la températures (13) et destiné à loger la pièce d'oeuvre (26) de telle manière qu'au moins une zone de la surface de la pièce d'oeuvre peut être exposée à un flux de gaz à la température donnée (34) sortant de la surface de sortie de flux du corps de régulation de la température,
**caractérisé en ce**
**que** le corps de régulation de la température (13) est poreux et muni d'une unité de régulation de la température (15) disposée dans le corps de régulation de la température, sachant que le corps de régulation de la température échauffe le flux de gaz par sa résistance à l'écoulement et forme un flux de gaz homogène grâce à sa configuration poreuse,
et **que** le flux de gaz est guidé le long du corps de régulation de la température afin de pénétrer à travers une surface d'entrée de flux (32) dans le corps poreux de régulation de la température et de le traverser ensuite selon une direction sensiblement verticale.

7. Dispositif selon la revendication 6,
**caractérisé en ce**
**que** le corps de régulation de la température (13) est de conception monolithique.

8. Dispositif selon l'une des revendications 6 ou 7,
**caractérisé en ce**
**que** le corps de régulation de la température (13) est constitué d'un matériau fritté.

9. Dispositif selon l'une des revendications 6 à 8,
**caractérisé en ce**
**que** le corps de régulation de la température (13) est constitué d'un métal.

10. Dispositif selon l'une des revendications 6 à 8,
**caractérisé en ce**
**que** le corps de régulation de la température (13) est constitué d'un matériau céramique.

11. Dispositif selon l'une des revendications 6 à 10,
**caractérisé en ce**
**qu'**un dispositif de guidage de flux (40) est disposé entre la surface de sortie de flux (35) du corps de régulation de la température (13) et l'élément porteur (25) destiné à loger la pièce d'oeuvre (26).
